# EUROPEAN PATENT APPLICATION

(11) **EP 4 776 420 A1**
(43) Date of publication of application: **15.07.2026**
(21) Application number: 25864612.4
(22) Date of filing: 18.07.2025
(51) Int. Cl.: H01M 50/533, H01M 50/536, H01M 50/183

(54) **ELECTRODE ASSEMBLY AND SECONDARY BATTERY COMPRISING SAME**

(30) Priority: 29.11.2024 KR 20240175546
(71) Applicant: LG Energy Solution, Ltd., Seoul 07335 (KR)
(72) Inventor: YOON, Kyoung Soon, Daejeon 34122 (KR); LEE, Yong Tae, Daejeon 34122 (KR); KO, Myung Hoon, Daejeon 34122 (KR); PARK, Wan Geun, Daejeon 34122 (KR); KIM, Nam Geol, Daejeon 34122 (KR); JEON, Young Je, Daejeon 34122 (KR)
(74) Representative: Goddar, Heinz J.
(86) International application number: PCT/KR2025/010651
(87) International publication number: WO 2026/116661

(57) **Abstract**

An electrode assembly according to the present disclosure includes an electrode including an electrode body, a first electrode tab extending from the electrode body, and a second electrode tab extending from the same side as a side of the electrode body, from which the first electrode tab extends, the electrode being provided in plurality to be stacked; and an electrode lead electrically coupled to the electrode tabs, wherein the first electrode tabs and the second electrode tabs of the plurality of electrodes are bent and stacked in different directions, to form a first electrode tab stack and a second electrode tab stack, respectively, wherein the electrode lead includes a first electrode lead provided to be in contact with the first electrode tab stack and the second electrode tab stack; and a second electrode lead coupled to the first electrode lead, and wherein the second electrode lead includes a facing portion facing the first electrode lead; and an extension portion extending from the facing portion in a direction distant from the electrode.

## Description

### TECHNICAL FIELD

### CROSS-REFERENCE TO RELATED APPLICATIONS

This application is based on and claims priority from Korean Patent Application No. 10-2024-0175546, filed on November 29, 2024, with the Korean Intellectual Property Office, the disclosure of which is incorporated herein in its entirety by reference.

### TECHNICAL FIELD

The present disclosure relates to an electrode assembly and a secondary battery including the same. More particularly, the present disclosure relates to an electrode assembly and a secondary battery including the same, which are configured to minimize dead spaces.

### BACKGROUND ART

A secondary battery configured to generate electricity is provided such that an electrode assembly is accommodated in a battery case. In this instance, the electrode assembly is formed by alternately stacking a plurality of electrodes and a plurality of separators. The electrode may include an electrode body on which an active material directly involved in electricity generation is located and an electrode tab extending from the electrode body to transfer generated electricity to the outside.

A plurality of electrode tabs of the respective plurality of electrodes may be combined into one electrode tab by welding or the like to be coupled to an electrode lead. Accordingly, the generated electricity may be transferred from the electrode tab to the electrode lead. The electrode lead is connected to the outside of the secondary battery, to become a path through which electricity is transferred to a component requiring the electricity. In this instance, the electrode tab is not a direct component which generates electricity, and therefore, a space occupied by the electrode tab may be referred to as a dead space as a space occupied by a component which does not generate electricity. The secondary battery may be generally disposed in a narrow space, and therefore, utilization of spaces is important. In light of this, reducing the dead space may increase an amount of electricity to be generated per unit space, and therefore may become an important problem in the utilization of spaces.

When the plurality of electrode tabs extend in a direction distant from the electrode body to be coupled to each other, there may occur a problem that many unnecessary dead spaces are formed. Therefore, it is necessary to solve this.

The above-described background art is technical information that the inventor had or learned when or while deriving embodiments of the present disclosure and may not have been publicly known before the filing of the present application.

### DISCLOSURE

### TECHNICAL PROBLEM

The present disclosure is designed to solve the problems of the related art, and therefore the present disclosure is directed to providing an electrode assembly and a secondary battery, which reduce a dead space formed by an electrode tab.

The technical problems to be solved by the present disclosure are not limited to the aforementioned technical problems, and these and other technical problems will be clearly understood by persons having ordinary skill in the technical field pertaining to the present disclosure from the following description.

### TECHNICAL SOLUTION

An electrode assembly according to one aspect of the present disclosure includes an electrode including an electrode body, a first electrode tab extending from the electrode body, and a second electrode tab extending from the same side as a side of the electrode body, from which the first electrode tab extends, the electrode being provided in plurality to be stacked; and an electrode lead electrically coupled to the electrode tabs, wherein the first electrode tabs and the second electrode tabs of the plurality of electrodes are bent and stacked in different directions, to form a first electrode tab stack and a second electrode tab stack, respectively, wherein the electrode lead includes a first electrode lead provided to be in contact with the first electrode tab stack and the second electrode tab stack; and a second electrode lead coupled to the first electrode lead, and wherein the second electrode lead includes a facing portion facing the first electrode lead; and an extension portion extending from the facing portion in a direction distant from the electrode.

The facing portion may be coupled to the first electrode lead while being in surface contact with the first electrode lead.

The first electrode lead may have a plate shape and overlap the first electrode tab stack and the second electrode tab stack.

The first electrode lead may be coupled to the first electrode tab stack and the second electrode tab stack by being welded to the first electrode tab stack and the second electrode tab stack in directions in which the first electrode tab stack and the second electrode tab stack extend while overlapping the first electrode tab stack and the second electrode tab stack.

End portions of the first electrode tab stack and the second electrode tab stack may be bent to be in contact with the opposite side of a side at which the first electrode lead faces the electrode body.

The electrode assembly may further include an attachment member coupling the end portions of the first electrode tab stack and the second electrode tab stack, the first electrode lead, and the electrode body.

The attachment member may be electrically insulated and be provided in a pair to respectively correspond to the first electrode tab stack and the second electrode tab stack, and the second electrode lead may be coupled to the first electrode lead between the pair of attachment members.

The electrode assembly may further include a lead film coupled to the extension portion.

The extension portion may be located in the middle of the electrode body in a stacking direction of the electrode body.

The first electrode lead and the second electrode lead may be integrally formed.

The facing portion may be formed to be bent from the first electrode lead.

A bending groove may be formed at a position of the first electrode lead, which is adjacent to the facing portion.

The facing portion may include a first facing portion and a second facing portion, which are bent in different directions.

The first electrode lead may include a first partial electrode lead extending from the first facing portion and a second partial electrode lead extending from the second facing portion in a direction different from a direction in which the first partial electrode lead extends. An area of the first partial electrode lead, which does not overlap the first facing portion, may be located in a bending direction of the first electrode tab stack, and an area of the second partial electrode lead, which does not overlap the second facing portion, may be located in a bending direction of the second electrode tab stack.

A coupling slit may be formed in an area of the facing portion, which overlaps the first electrode lead.

An electrode assembly according to another aspect of the present disclosure includes an electrode including an electrode body and an electrode tab bent and extending from the electrode body; and an electrode lead electrically coupled to the electrode tab, wherein the electrode lead includes a first electrode lead provided to be in surface contact with the electrode tab; and a second electrode lead coupled to the first electrode lead while being in surface contact with the first electrode lead.

The second electrode lead may include a facing portion facing the first electrode lead; and an extension portion extending from the facing portion in a direction distant from the electrode.

The first electrode lead may have a plate shape and overlap the first electrode tab stack and the second electrode tab stack.

A tab coupling slit may be firmed in an area of the first electrode lead, which overlaps the electrode tab.

A secondary battery according to still another aspect of the present disclosure includes an electrode assembly; and a battery case accommodating the electrode assembly, wherein the electrode assembly includes an electrode including an electrode body, a first electrode tab extending from the electrode body, and a second electrode tab extending from the same side as a side of the electrode body, from which the first electrode tab extends, the electrode being provided in plurality to be stacked; and an electrode lead electrically coupled to the electrode tabs, wherein the first electrode tabs and the second electrode tabs of the plurality of electrodes are bent and stacked in different directions, to form a first electrode tab stack and a second electrode tab stack, respectively, wherein the electrode lead includes a first electrode lead provided to be in contact with the first electrode tab stack and the second electrode tab stack; and a second electrode lead coupled to the first electrode lead, and wherein the second electrode lead includes a facing portion facing the first electrode lead; and an extension portion extending from the facing portion in a direction distant from the electrode.

### ADVANTAGEOUS EFFECTS

According to one aspect of the present disclosure, in the electrode assembly, an electrode tab is bent from an electrode body, so that a degree to which the electrode tab protrudes from the electrode body can be reduced, thereby minimizing dead spaces.

According to one aspect of the present disclosure, the electrode assembly includes first electrode tabs and second electrode tabs, which are bent in directions opposite to each other at one side, so that although an area in which electrode tabs are not welded to each other exists as electrode tabs excessively overlap each other in any one of electrode tab stacks in which the first electrode tabs and the second electrode tabs overlap each other, respectively, welding is performed in the other of the electrode tab stacks, thereby preventing a problem occurring as electrode tabs are not welded to each other.

According to one aspect of the present disclosure, the electrode assembly includes an electrode lead coupled to a surface disposed at an outside by bending of an electrode tab, the electrode lead including a shape extending in the opposite direction of a direction in which an electrode extends, so that the electrode lead can be provided, which is stably coupled to the electrode tab in spite of the shape of the electrode tab.

According to one aspect of the present disclosure, in the electrode assembly, an electrode lead includes a first electrode lead coupled to an electrode tab and a second electrode lead coupled to the first electrode lead, so that the electrode lead can be stably formed.

According to one aspect of the present disclosure, the secondary battery includes the above electrode assembly, so that the above effects can be obtained.

The effects of the present disclosure are not limited to the effects mentioned above, and other effects not mentioned will be clearly understood by those skilled in the art from the description of the claims.

### DESCRIPTION OF DRAWINGS

FIG. 1 is an assembly diagram of a secondary battery according to a first embodiment of the present disclosure.
FIG. 2 is a cross-sectional view when the secondary battery shown in FIG. 1 is completed.
FIG. 3 is a perspective view showing that an electrode tab is bent in an electrode of an electrode assembly shown in FIG. 1.
FIG. 4 is a perspective view showing that a first electrode lead is coupled to the electrode tab of the electrode assembly shown in FIG. 3.
FIG. 5 is a perspective view showing that the first electrode lead is coupled to the electrode tab of the electrode assembly shown in FIG. 4.
FIG. 6 is a perspective view showing that an end portion of the electrode tab of the electrode assembly shown in FIG. 5 is bent and an attachment member is attached to the bent portion.
FIG. 7 is a perspective view showing that a second electrode lead is coupled to the first electrode lead of the electrode assembly shown in FIG. 6.
FIG. 8 is a perspective view showing an electrode lead shown in FIG. 7.
FIG. 9 is a perspective view showing an electrode lead according to a second embodiment of the present disclosure.
FIG. 10 is a development view showing that the electrode lead shown in FIG. 9 is spread.
FIG. 11 is a perspective view showing an electrode lead according to a third embodiment of the present disclosure.
FIG. 12 is a development view showing that the electrode lead shown in FIG. 11 is spread.
FIG. 13 is a perspective view showing an electrode lead according to a fourth embodiment of the present disclosure.
FIG. 14 is a development view showing that the electrode lead shown in FIG. 13 is spread.

### BEST MODE

Hereinafter, the exemplary embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the specification.

Additionally, it should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define the terms appropriately for the best explanation.

It should be understood that various embodiments of the present disclosure and the terms used herein are not intended to limit the technical features of the present disclosure to particular embodiments, and include a variety of changes, equivalents or substitutes of the corresponding embodiments.

In relation to the description of the drawings, for the similar or related elements, the similar reference numerals may be used.

The singular form of a noun corresponding to an item may include one or more items unless otherwise indicated by the context.

Each of phrases such as "A or B," "at least one of A and B," "at least one of A or B," "A, B or C," "at least one of A, B and C" and "at least one of A, B or C" as used herein may include any one of the items listed together with the corresponding phrase or all possible combinations of them.

The term "and/or" includes a combination of a plurality of related stated elements or any of the plurality of related stated elements.

The terms such as "first," "second" and so on may be simply used to distinguish the corresponding element from the corresponding other embodiment, and are not intended to limit the corresponding elements in another aspect (for example, importance or order).

When an element (for example, first) is referred to as being "coupled" or "connected" to another element (for example, second) with or without the term "functionally" or "through communication," the element may be connected to the other element directly (for example, wiredly), wirelessly or through a third element.

The term "comprise," "include" or "have" indicates the presence of the stated features, figures, steps, operations, elements, components or a combination of them, and does not preclude the presence or addition of one or more other features, figures, steps, operations, elements, components or a combination of them.

When an element is referred to as "being connected to," "being coupled to," "being supported by" or "contacting" another element, this includes the cases in which the elements are directly connected, coupled, supported or contacted with each other and they are indirectly connected, coupled, supported or contacted with each other through a third element.

When an element is referred to as being located "on" another element, the element can contact the other element and another element may be present between them.

Meanwhile, the terms "up-down direction," "lower," and "front-rear direction" as used herein are defined on the basis of the drawings, and the shape and location of each element is not limited by these terms.

Hereinafter, embodiments according to the present disclosure will be described in detail with reference to the accompanying drawings.

### First embodiment

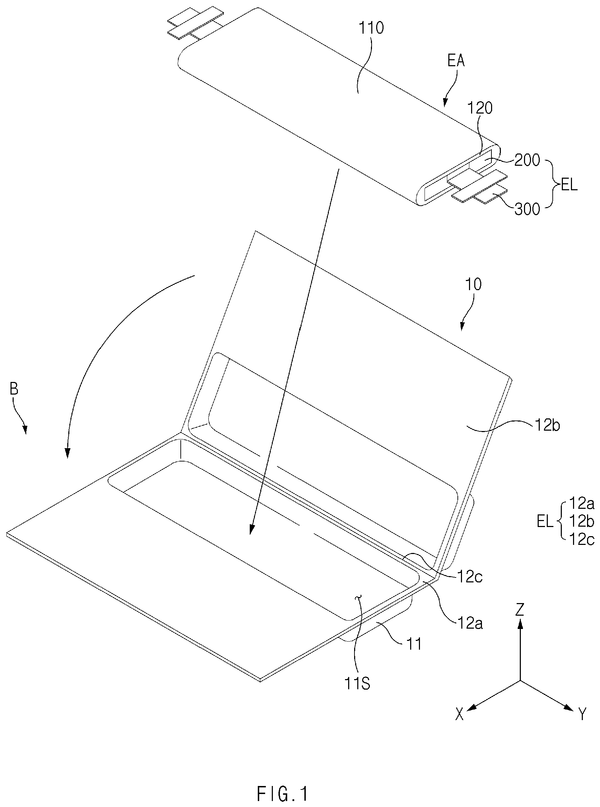

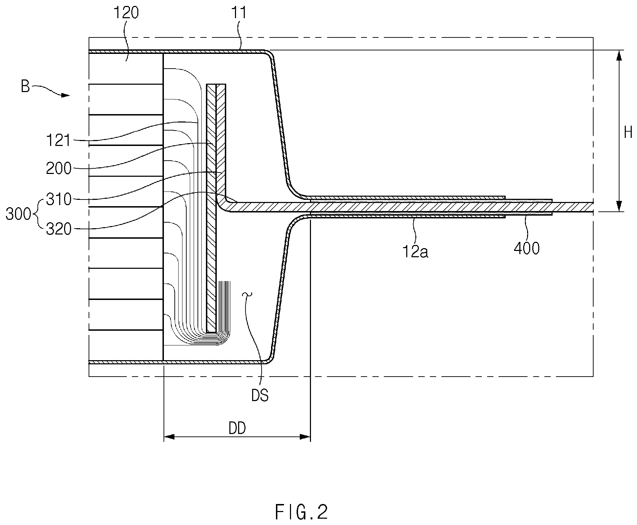

FIG. 1 is an assembly diagram of a secondary battery B according to a first embodiment of the present disclosure. FIG. 2 is a cross-sectional view when the secondary battery B shown in FIG. 1 is completed.

The secondary battery B according to the first embodiment of the present disclosure will be described with reference to FIGS. 1 and 2.

The secondary battery B configured to generate electricity may be provided. The secondary battery B may be rechargeable and used plural times. The secondary battery B may include a battery case 10 located at an outside thereof, the electrode assembly EA accommodated inside the battery case 10, and an electrolyte configured to be injected into the battery case 10. In this instance, as shown in FIG. 1, the battery case 10 may be formed by a pouch film. However, the battery case 10 may be provided in a cylindrical type or a prismatic type according to the needs. The electrolyte may generally mean a liquid-state electrolyte but may mean a solid-state electrolyte according to the needs.

The battery case 10 may include an accommodation portion 11 in which an electrode accommodation space 11S is formed to accommodate the electrode assembly EA and a side portion 12 extending from the accommodation portion 11. The accommodation portion 11 may be provided in a pair as shown in FIG. 1. When the electrode assembly EA is accommodated in any one accommodation portion 11, the other accommodation portion 11 covers the electrode assembly EA, to allow the electrode assembly EA to be accommodated in the battery case 10. The accommodation portion 11 may be formed in a pair in a single battery case 10. However, according to the needs, the accommodation portions 11 may be formed one by one in a pair of battery cases 10 distinguished from each other, respectively. Further, the accommodation portion 11 may be provided as a single one according to the needs.

The side portion 12 may include a lead sealing portion 12a, a degassing sealing portion 12b, and/or a folding portion 12c. The lead sealing portion 12a may be provided in a pair to extend in a Y direction from the accommodation portion 11. The degassing sealing portion 12b may be provided in a pair to extend in an X direction from the accommodation portion 11. The folding portion 12c may be located between the pair of accommodation portions 11. As shown in FIG. 1, the folding portion 12c may be folded such that the pair of accommodation portions 11 are located to face each other. When the pair of accommodation portions 11 face each other, the folded lead sealing portions 12a may be located to face each other, and the pair of degassing sealing portions 12b may also be located to face each other. The lead sealing portions 12a facing each other and the degassing sealing portions 12b facing each other are fused with each other by heat and pressure, to seal the accommodation portion 11. Further, the degassing sealing portion 12b is trimmed to a predetermined length so as to increase space utility of the secondary battery B by reducing the length thereof, and the trimmed degassing sealing portion 12b is re-folded, thereby reducing a space occupied by the degassing sealing portion 12b.

The electrode assembly EA may include an electrode 100, a separator (not shown), and/or an electrode lead EL. The electrode 100 and the separator each may be provided in plurality such that the plurality of electrodes and the plurality of separators are alternately stacked. In this instance, the electrode 100 may include an electrode body 110 and an electrode tab 120 extending from the electrode body 110. The electrode tab 120 may be formed to have a width smaller than a width of the electrode body 110. An active material is coated on the electrode body 110 to directly generate electricity. The electrode tab 120 may serve as a path through which the electricity generated by the electrode body 110 is transferred. The electrode tab 120 is coupled to the electrode lead EL, to transfer the electricity to the electrode lead EL. The electrode lead EL protrudes to an outside of the battery case 10 such that an external component requiring electricity can be supplied with the electricity from the secondary battery B while being in contact with the electrode lead EL.

In this instance, the electrode tab 120 is not a portion which generates electricity, and therefore may not contribute to an amount of electricity generated per space. Therefore, it is necessary to reduce a dead space DS which is a space occupied by the electrode tab 120. In order to solve this, a secondary battery B according to an embodiment of the present disclosure may be provided as shown in FIG. 2.

As shown in FIG. 2, the electrode tab 120 may be configured not to extend toward an outside of the electrode 100 but to be bent to a lower side from the electrode body 110 so as to be adhered closely to the electrode body 110. However, the bending direction of the electrode tab 120 may become an upper side instead of the lower side according to the needs, and further, may become another direction as long as the bending direction is not parallel to the extending direction of the electrode body 110. The bent electrode tab 120 may form an electrode tab stack 121. One surface of the electrode tab stack 121 is located toward the right side of the electrode tab stack 121 with respect to FIG. 2, and the electrode lead EL may be coupled to the one surface of the electrode tab stack 121 at the right side of the electrode tab stack 121. Accordingly, a distance from the electrode body 110 to an end portion of the electrode tab 120 may become shorter than a distance when the electrode tab 120 extends in a direction parallel to the electrode body110. A space located at the upper side and the lower side of the electrode tab 120 may form the dead space DS as a space unnecessary for generating electricity. In particular, as illustrated in FIG. 2, reducing a dead space distance DD which is a distance up to an inner wall of the accommodation portion 11 may be necessary so as to reduce the dead space DS.

Hereinafter, the electrode assembly EA according to the first embodiment of the present disclosure will be described in more detail. In particular, hereinafter, the electrode assembly EA according to the first embodiment of the present disclosure will be described base on features of the electrode lead EL coupled to the bent electrode tab 120. In particular, hereinafter, processes of forming the electrode assembly EA will be mainly described, and a function which each component performs in each process will be described.

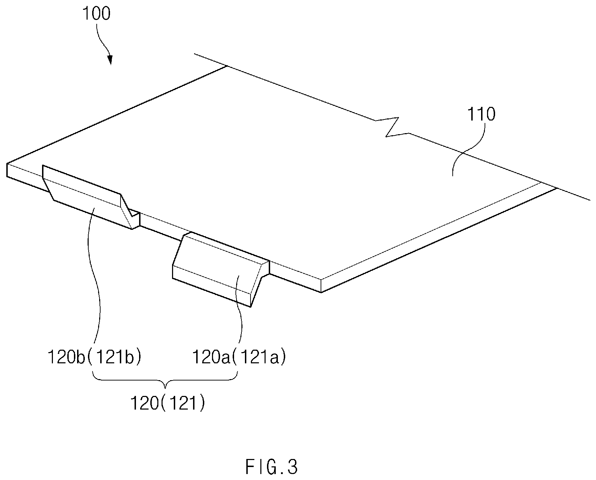

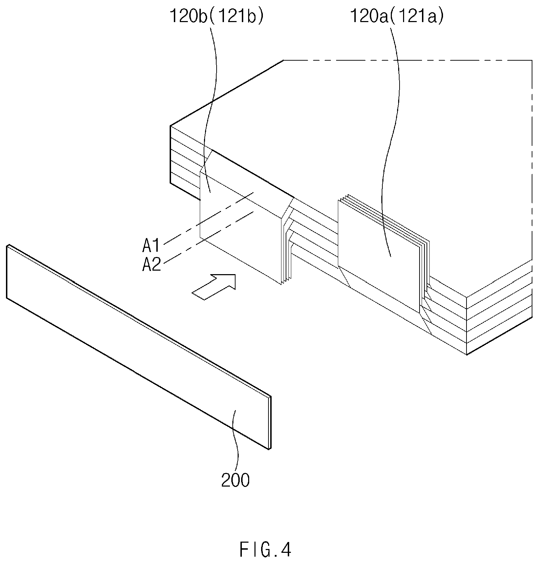

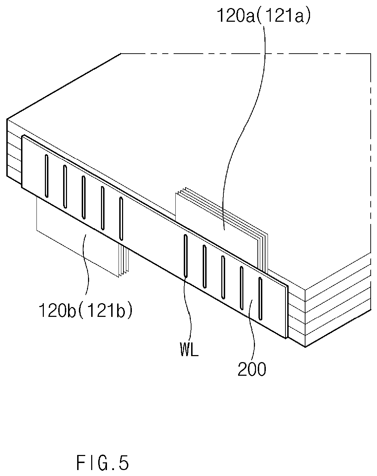

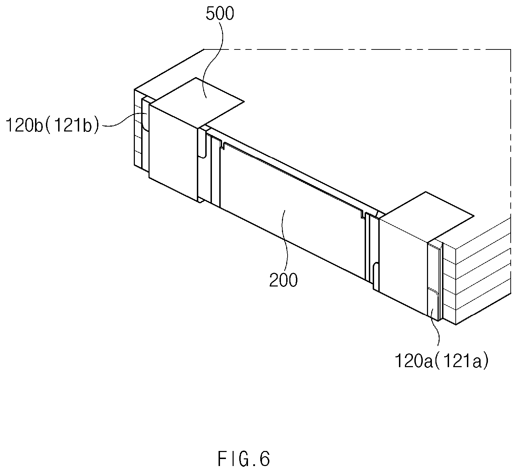

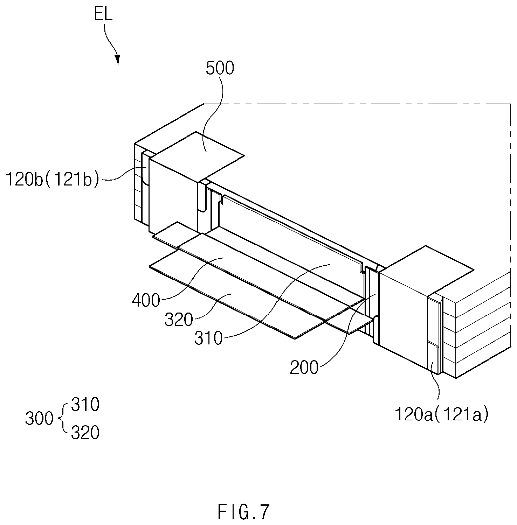

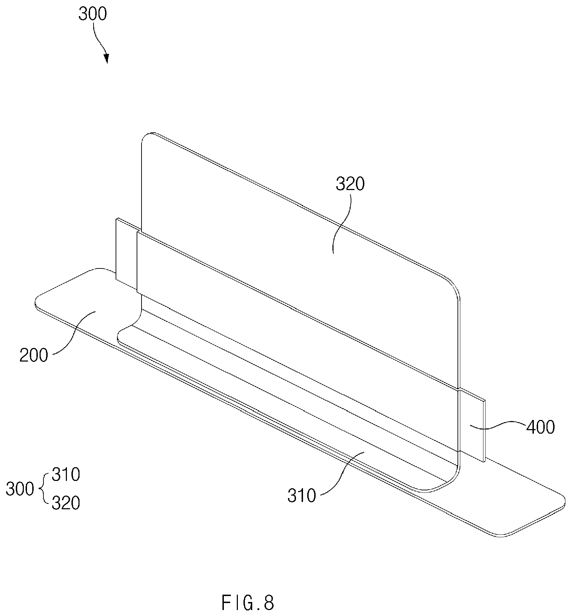

FIG. 3 is a perspective view showing that the electrode tab 120 is bent in the electrode 100 of the electrode assembly EA shown in FIG. 1. FIG. 4 is a perspective view showing that a first electrode lead 200 is coupled to the electrode tab 120 of the electrode assembly EA shown in FIG. 3. FIG. 5 is a perspective view showing that the first electrode lead 200 is coupled to the electrode tab 120 of the electrode assembly EA shown in FIG. 4. FIG. 6 is a perspective view showing that an end portion of the electrode tab 120 of the electrode assembly EA shown in FIG. 5 is bent and an attachment member 500 is attached to the bent portion. FIG. 7 is a perspective view showing that a second electrode lead 300 is coupled to the first electrode lead 200 of the electrode assembly EA shown in FIG. 6. FIG. 8 is a perspective view showing the electrode lead EL shown in FIG. 7.

A configuration of the electrode tab 120 and the electrode lead EL of the electrode assembly EA according to the first embodiment of the present disclosure will be described with reference to FIGS. 3 to 8.

As shown in FIG. 3, the electrode tab 120 may be bent from the electrode body 110. In this instance, each electrode 100 may be stacked in a state in which the electrode tab 120 has already been bent from the electrode body 110. However, according to the needs, an electrode 100 including an electrode tab 120 not bent from an electrode body 110 may be first stacked, and the stacked electrode tab 120 may be bent from the electrode body 110 after the stacking.

In this instance, the electrode tab 120 may include a first electrode tab 120a extending from the electrode body 110 and a second electrode tab 120b extending from the same side as a side of the electrode body 110, from which the first electrode tab 120a of the electrode body 110 extends. With respect to FIG. 3, the side of the electrode body 110, from which the first electrode tab 120a and the second electrode tab 120b extend, may become the front. The first electrode tab 120a and the second electrode tab 120b may have a same polarity. For example, when the first electrode tab 120a is a positive electrode, the second electrode tab 120b may also be the positive electrode. Forming an electrode tab 120 having one polarity as a pair of electrode tabs 120 instead of a single electrode tab 120 may be for the purpose of preparing for a welding defect to be described below. Further, a plurality of electrode tabs 120 are formed, so that resistance caused by the electrode tabs 120 can be lowered while electricity is transferred through the electrode tabs 120. In this instance, the electrode tab 120 is not provided in a pair but may be provided with electrode tabs 120 of which number is larger than that of the pair of electrode tabs 120.

As shown in FIG. 3, the first electrode tab 120a may be located at the right side of the second electrode tab 120b to be bent to the lower side, and the second electrode tab 120b may be located at the left side of the first electrode tab 120a to be bent to the upper side. In this instance, the electrode tab 120 may be understood as an upper concept obtained by extracting common features of the first electrode tab 120a and the second electrode tab 120b. Further, a bending direction of the first electrode tab 120a is merely different from a bending direction of the second electrode tab 120b, and the bending direction of the first electrode tab 120a may become another direction instead of the upper side according to the needs. In addition, the first electrode tab 120a may be located at another position instead of the right side of the second electrode tab 120b according to the needs. The first electrode tab 120a may be stacked in plurality to form a first electrode tab stack 121a, and the second electrode tab 120b may be stacked in plurality to form a second electrode tab stack 121b. In this instance, the electrode tab stack 121 may be understood as an upper concept obtained by extracting common features of the first electrode tab 120a and the second electrode tab 120b. In this instance, the first electrode tab stack 121a may be bent such that a lower surface thereof is exposed with respect to when the first electrode tab stack 121a extends in a direction parallel to the extending direction of the electrode body 110 before being bent. The second electrode tab stack 121b may be bent such that an upper surface thereof is exposed with respect to when the second electrode tab stack 121b extends in a direction parallel to the extending direction of the electrode body 110 before being bent. In other words, the electrode tab stack 121 may have a form in which a plurality of electrode tabs 120 are lowered and bent in one direction. Since the electrode tab stack 121 has a small degree to which the electrode tab 120 protrudes with respect to the electrode body 110, the dead space DS can be reduced.

As shown in FIGS. 4 and 5, the first electrode lead 200 may be provided to be coupled to the first electrode tab 120a and the second electrode tab 120b. The above-described electrode lead EL may be an upper concept obtained by extracting common features of the first electrode lead 200 and the second electrode lead 300. The first electrode lead 200 may be located at the front of the first electrode tab stack 121a and the second electrode 100 tab stack. Accordingly, a rear surface of the first electrode lead 200 may be coupled the lower surface of the first electrode tab stack 121a before the bending and the upper surface of the second electrode tab stack 121b before the bending. In other words, the first electrode lead 200 may be coupled to the first electrode tab stack 121a and the second electrode tab stack 121b by being welded to the first electrode tab stack 121a and the second electrode tab stack 121b in directions in which the first electrode tab stack 121a and the second electrode tab stack 121b extend while overlapping the first electrode tab stack 121a and the second electrode tab stack 121b. In this instance, the first electrode lead 200 may have a plate shape. More specifically, the first electrode lead 200 may have a plate shape and overlap the first electrode tab stack 121a and the second electrode tab stack 121b. The first electrode lead 200 may not be located beyond the stacked electrode bodies 110. However, when the first electrode lead 200 is coupled to the first electrode tab 120a and the second electrode tab 120b, the first electrode lead 200 may have another shape instead of the plate shape according to the needs. Further, the first electrode lead 200 may be formed as a single body. However, according to the needs, the first electrode lead 200 may be provided as an assembly of a plurality of components when the plurality of components are electrically connected to each other.

In this instance, in the cross-sectional view shown in FIG. 4, the electrode tab stack 121 may have different overlapping degrees of the electrode tabs 120 according to positions thereof. When considering, with respect to FIG. 4, overlapping degrees of the electrode tabs 120 in a first tab overlapping area A1 located at an upper side and a second tab overlapping area A2 located at a lower side of the first tab overlapping area A1, a tab overlapping degree in the second tab overlapping area A2 is larger than a tab overlapping degree in the first tab overlapping area A1. In this instance, as shown in FIG. 5, in a case where a welding line WL is formed by performing welding toward the electrode tab stack 121 from an outside of the first electrode lead 200, when uniform thermal energy is applied to the welding line WL, the thermal energy generated by the welding can be sufficiently transferred to the electrode tabs 120 in the first tab overlapping area A1, but may not be sufficiently transferred to an electrode tab 120 closest to the electrode body 110 in the second tab overlapping area A2. Therefore, the electrode tab 120 closest to the electrode body 110 may not be coupled to an adjacent electrode tab 120. In order to overcome this, the electrode tab 120 may be composed of two electrode tabs, i.e., the first electrode tab 120a and the second electrode tab 120b, and the first electrode tab 120a and the second electrode tab 120b may be provided to have different bending directions. In particular, as shown in FIG. 4, when the second electrode tab 120b is bent to the lower side, larger overlapping of the second electrode tabs 120b occurs at a portion of the second electrode tab stack 121b, which is located at a relatively lower side, as compared with a portion of the second electrode tab stack 121b, which is located at a relatively upper side, and therefore, there is a risk that the welding will not be properly performed. On the contrary, since smaller overlapping of the bent first electrode tab 120a occurs at a portion of the first electrode tab stack 121a, which is located at a relatively lower side, as compared with a portion of the first electrode tab stack 121a, which is located at a relatively upper side, the welding is performed on the first electrode tab stack 121a even when the welding is not properly performed on the second electrode tab stack 121b, thereby reducing a probability that an electrode tab 120 not welded to an adjacent electrode tab will exist. Further, when a single electrode tab 120 is provided, a bending moment may occur in a direction in which bending is released, and the first electrode lead 200 coupled to the single electrode tab 120 may be turned in one direction by the bending moment. However, in the first embodiment of the present disclosure, in a case where the first electrode tab 120a and the second electrode tab 120b are provided to have different bending directions, although a bending moment occurs in a direction in which bending of the first electrode tab stack 121a is released, a bending moment occurring in a direction in which bending of the second electrode tab stack 121b is released occurs in the opposite direction. Accordingly, the bending moments cancel each other, so that movement of the first electrode lead 200 can be prevented. Additionally, coupling of the first electrode lead 200, and the first electrode tab stack 121a and the second electrode tab stack 121b may be made by another method instead of the welding according to the needs.

Further, as shown in FIG. 5, when the first electrode lead 200 is coupled to the first electrode tab stack 121a and the second electrode tab stack 121b, an end portion of the first electrode tab stack 121a may be exposed to an upper side of the first electrode lead 200, and an end portion of the second electrode tab stack 121b may be exposed to the upper side of the first electrode lead 200. The exposed end portion of the first electrode tab stack 121a may be bent to the lower side to face an outer surface of the first electrode lead 200, and the exposed end portion of the second electrode tab stack 121b may be bent to the upper side to face an outer surface of the first electrode lead 200. In other words, the end portions of the first electrode tab stack 121a and the second electrode tab stack 121b may be bent to be in contact with the opposite side of a side at which the first electrode lead 200 faces the electrode body 110.

As described above, in a bent component, a bending moment may occur in a direction in which the bending is released. The end portion of the first electrode tab stack 121a and the end portion of the second electrode tab stack 121b may be deformed as a bending moment in an unintended direction occurs. Therefore, in order to prevent this, the attachment member 500 may be provided. The attachment member 500 may couple the end portions of the first electrode tab stack 121a and the second electrode tab stack 121b, the first electrode lead 200, and the electrode body 110. As shown in FIG. 6, the attachment member 500 may be provided in a pair to respectively cover the end portion of the first electrode tab stack 121a and the end portion of the second electrode tab stack 121b. The attachment member 500 are attached to all of the electrode body 110, the electrode tab stack 121, and the first electrode lead 200, to fix together the electrode body 110, the electrode tab stack 121, and the first electrode lead 200. The attachment member 500 may be, for example, a tape. Further, the attachment member 500 has an electrically insulated material, to prevent electricity from flowing between the electrode tab 120, the electrode body 110, and the electrode lead EL through the attachment member 500.

As shown in FIGS. 7 and 8, the second electrode lead 300 coupled to the first electrode lead 200 may be provided. The first electrode lead 200 may be coupled to the second electrode lead 300 between the pair of attachment members 500 so as to be electrically connected to the second electrode lead 300. The second electrode lead 300 may be exposed to an outside of the battery case 10 such that an external component can be in contact therewith.

The second electrode lead 300 may include a facing portion 310 facing the first electrode lead 200 and an extension portion 320 extending from the facing portion 310 in a direction distant from the electrode 100. In this instance, the facing portion 310 may extend in a direction parallel to the extending direction of the first electrode lead 200. Further, the facing portion 310 may be coupled to the first electrode lead 200 while being in surface contact with the first electrode lead 200. Accordingly, resistance between the facing portion 310 and the first electrode lead 200 may be reduced as compared with resistance when the facing portion 310 is coupled to the first electrode lead 200 while being in point contact with the first electrode lead 200. The extension portion 320 may be bent from the facing portion 310 to extend toward the front. However, when the extension portion 320 extends in a direction distant from the electrode body 110, the extension portion 320 may extend in another direction instead of the front according to the needs. In this instance, the position of the extension portion 320 may be a position corresponding to the middle of the electrode bodies 110 in the stacking direction of the electrode bodies 110 as shown in FIG. 2. In other words, a height H from an end portion of the accommodation portion 11 to the extension portion 320 may be a half of a distance between the pair of accommodation portions 11. Accordingly, the pair of accommodation portions 11 may be formed to a depth where the pair of accommodation portions 11 correspond to each other.

Additionally, a lead film 400 may be coupled to the extension portion 320. The lead film 400 may have a material friendly to an inside of the battery case 10 as compared with the extension portion 320. Accordingly, a coupling force when the extension portion 320 is coupled to the battery case 10 through the lead film 400 can become stronger than a coupling force when the extension portion 320 is coupled to the battery case 10.

Hereinafter, different embodiment(s) from the first embodiment will be described. The common description to the first embodiment and the other embodiment(s) is omitted and the other embodiment(s) will be described based on difference(s). That is, it is obvious that when a certain description not mentioned in the other embodiments is necessary, the description of the first embodiment may make up for the description.

### Second embodiment

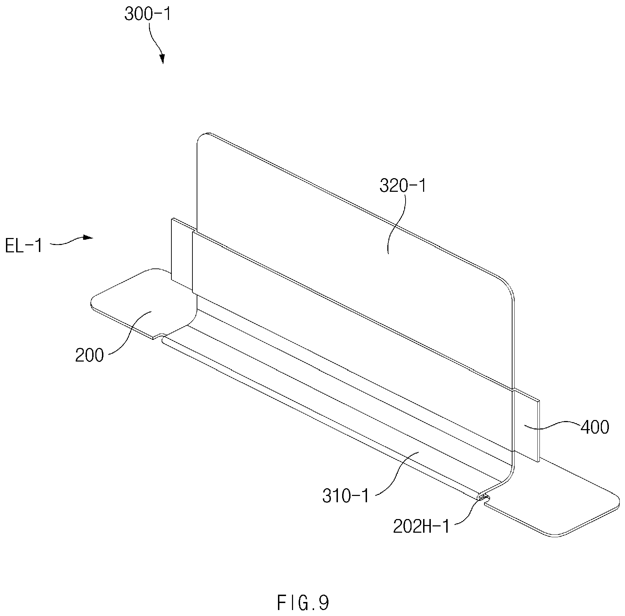

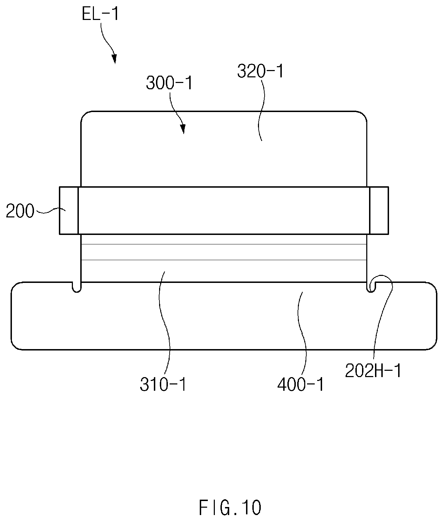

FIG. 9 is a perspective view showing an electrode lead EL-1 according to a second embodiment of the present disclosure. FIG. 10 is a development view showing that the electrode lead EL-1 shown in FIG. 9 is spread.

The electrode lead EL-1 according to the second embodiment of the present disclosure will be described with reference to FIGS. 9 and 10.

The second embodiment is different from the first embodiment in that a first electrode lead 200-1 and a second electrode lead 300-1 are integrally formed.

In other words, the first electrode lead 200-1 and the second electrode lead 300-1 may be integrally formed. As shown in FIG. 10, the first electrode lead 200-1 and the second electrode lead 300-1, which are integrally formed, may be spread in a state in which the first electrode lead 200-1 and the second electrode lead 300-1 are not bent, and then bent, to have a form similar to that of the first embodiment. In this instance, a facing portion 310-1 may be formed to be bent from the first electrode lead 200-1. A bending groove 202H-1 may be formed at a position of the first electrode lead 200-1, which is adjacent to the facing portion 310-1. The bending groove 202H-1 enables a point at which the bending of the facing portion 310-1 is made to be easily recognized, and further enables the bending to be easily made. More specifically, as the facing portion 310-1 is bent, a component located between the first electrode lead 200-1 and the facing portion 310-1 is folded, and may be pushed out to the bending groove 202H-1 since a volume of the component is pushed in a course in which the component is folded. If the bending groove 202H-1 does not exist, it may be difficult that the volume of the component pushed while being folded is moved. Accordingly, the bending groove 202H-1 can facilitate the folding.

Additionally, as shown in FIG. 10, the electrode lead EL-1 in a state before not being folded yet may also referred to as the electrode lead EL-1. It can be seen that the aspect of the present disclosure is applied even to the electrode lead EL-1 in the state before not being folded as described above.

In the electrode lead EL-1 according to the second embodiment, since a coupling process between the first electrode lead 200-1 and the second electrode lead 300-1 does not exist, processes can be simplified, and a probability that a problem will occur in the coupling process can be reduced.

### Third embodiment

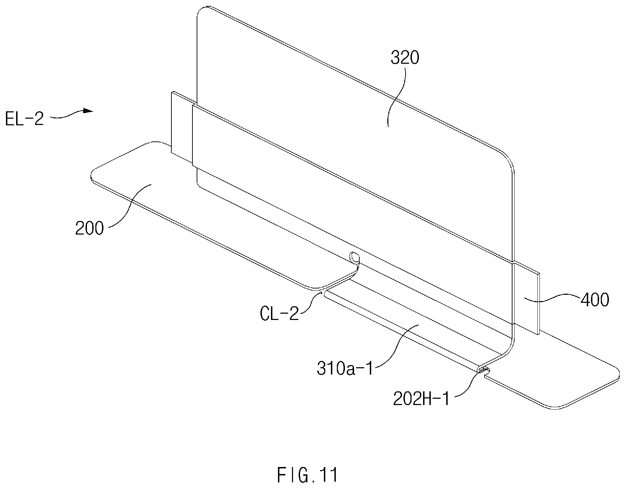

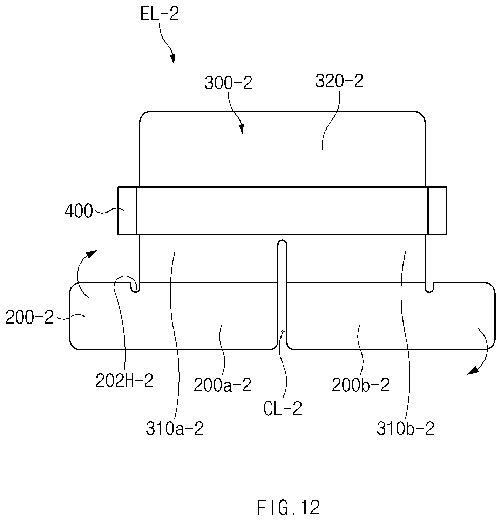

FIG. 11 is a perspective view showing an electrode lead EL-2 according to a third embodiment of the present disclosure. FIG. 12 is a development view showing that the electrode lead EL-2 shown in FIG. 11 is spread.

The electrode lead EL-2 according to the third embodiment of the present disclosure will be described with reference to FIGS. 11 and 12.

The third embodiment is different from the second embodiment in that a first electrode lead 200-2 is divided into two parts located in different directions and that a cutting slit CL-2 is formed which divides each of a facing portion 310-2 and the first electrode lead 200-2 into two parts.

As shown in FIG. 12, the facing portion 310-2 may include a first facing portion 310a-2 and a second facing portion 310b-2, which are configured to be bent in different directions. The first facing portion 310a-2 may be bent and extend to an upper side, and the second facing portion 310b-2 may be bent and extend to a lower side. In this instance, the first electrode lead 200-2 may include a first partial electrode lead 200a-2 extending from the first facing portion 310a-2 and a second partial electrode lead 200b-2 extending from the second facing portion 310b-1 in a direction different from a direction in which the first partial electrode lead 200a-2 extends. The cutting slit CL-2 which separates the first facing portion 310a-2 and the first partial electrode lead 200a-2 from the second facing portion 310b-2 and the second partial electrode lead 200b-2 may be formed therebetween.

In this instance, the first partial electrode lead 200a-2 may be bent from the first facing portion 310a-2 to extend to the lower side, and the second partial electrode lead 200b-2 may be bent from the second facing portion 310b-2 to extend to the upper side. The first partial electrode lead 200a-2 and the second partial electrode lead 200b-2 may include areas which overlap or do not overlap the first facing portion 310a-2 and the second facing portion 310b-2, respectively. When welding is to be performed on an area overlapping the first facing portion 310a-2 at an outside of the first facing portion 310a-2 with respect to the first partial electrode lead 200a-2, it may be difficult for thermal energy for welding to sufficiently reach a first electrode tab stack 121a-2. Accordingly, the thermal energy for welding can be sufficiently transferred to the first electrode tab stack 121a-2 through the welding with respect to a portion of the first partial electrode lead 200a-2, which does not overlap the first facing portion 310a-2. In the above description, it has been described that since an overlapping amount of an electrode tab 120-2 increases as approaching an end portion of the first electrode tab stack 121a-2, it may be difficult to perform the welding. By considering this, the portion of the first partial electrode lead 200a-2, which does not overlap the first facing portion 310a-2, may preferably overlap the end portion of the first electrode tab stack 121a-2. Description of the second partial electrode lead 200b-2 corresponds to that of the first partial electrode lead 200a-2, and therefore will be omitted. In other words, an area of the first partial electrode lead 200a-2, which does not overlap the first facing portion 310a-2, may be located in a bending direction of the first electrode tab stack 121a-2, and an area of the second partial electrode lead 200b-2, which does not overlap the second facing portion 310b-2, may be located in a bending direction of a second electrode tab stack 121b-2.

### Forth embodiment

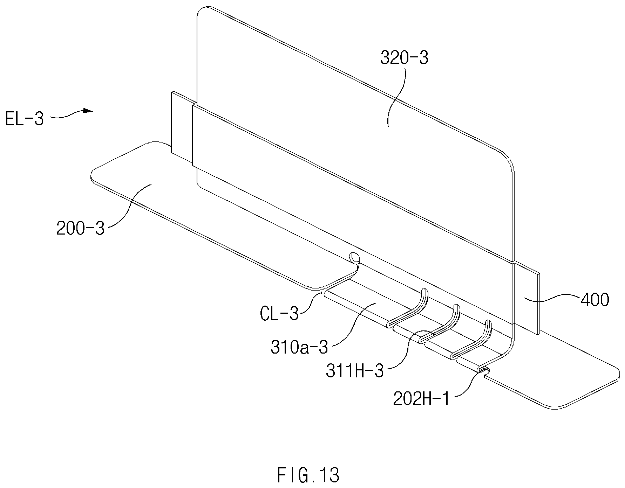

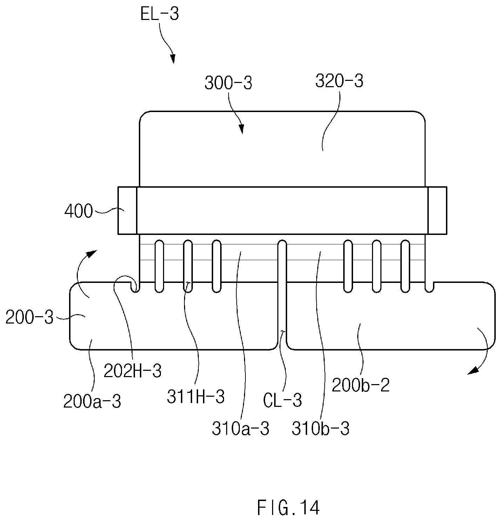

FIG. 13 is a perspective view showing an electrode lead EL-3-3 according to a fourth embodiment of the present disclosure. FIG. 14 is a development view showing that the electrode lead EL-3-3 shown in FIG. 13 is spread.

The electrode lead EL-3 according to the third embodiment of the present disclosure will be described with reference to FIGS. 13 and 14.

The fourth embodiment is different from the third embodiment in that a coupling slit 311H-3 for welding is formed in a facing portion 310-3.

The coupling slit 311H-3 may be formed an area of each of a first facing portion 310-3 and a second facing portion 310b-3, which overlaps a first electrode lead 200-3. In the above description of the second embodiment, it has been described that it is difficult for welding to be performed on areas in which the first facing portion 310a-3 and the second facing portion 310b-3 respectively overlap a first partial electrode lead 200a-3 and a second partial electrode lead 200b-3. In order to solve this, the coupling slit 311H-3 may be formed in the first facing portion 310a-3 and the second facing portion 310b-3. The coupling slit 311H-3 may extend in an extending direction of the first facing portion 310a-3 and the second facing portion 310b-3. The coupling slit 311H-3 may be provided in plurality to be arranged in a direction perpendicular to the extending direction. Further, the coupling slit 311H-3 may extend up to the first partial electrode lead 200a-3 and the second partial electrode lead 200b-3 beyond the first facing portion 310a-3 and the second facing portion 310b-3.

In the above, an embodiment which may be implemented by applying the aspect of the present disclosure from the first embodiment to the fourth embodiment has been described. The aspect of the present disclosure, which is described in the embodiment, may be described as follows.

An electrode assembly may include an electrode including an electrode body, a first electrode tab extending from the electrode body, and a second electrode tab extending from the same side as a side of the electrode body, from which the first electrode tab extends, the electrode being provided in plurality to be stacked, and an electrode lead electrically coupled to the electrode tabs, wherein the first electrode tabs and the second electrode tabs of the plurality of electrodes may be bent and stacked in different directions, to form a first electrode tab stack and a second electrode tab stack, respectively, wherein the electrode lead may include a first electrode lead provided to be in contact with the first electrode tab stack and the second electrode tab stack, and a second electrode lead coupled to the first electrode lead, and wherein the second electrode lead may include a facing portion facing the first electrode lead, and an extension portion extending from the facing portion in a direction distant from the electrode.

Alternatively, an electrode assembly may include an electrode including an electrode body, an electrode tab bent and extending from the electrode body, and an electrode lead electrically coupled to the electrode tab, wherein the electrode lead may include a first electrode lead provided to be in surface contact with the electrode tab, and a second electrode lead coupled to the first electrode lead while being in surface contact with the first electrode lead.

Alternatively, a secondary battery may include an electrode assembly, and a battery case accommodating the electrode assembly, wherein the electrode assembly may include an electrode including an electrode body, a first electrode tab extending from the electrode body, and a second electrode tab extending from the same side as a side of the electrode body, from which the first electrode tab extends, the electrode being provided in plurality to be stacked, and an electrode lead electrically coupled to the electrode tabs, wherein the first electrode tabs and the second electrode tabs of the plurality of electrodes may be bent and stacked in different directions, to form a first electrode tab stack and a second electrode tab stack, respectively, wherein the electrode lead may include a first electrode lead provided to be in contact with the first electrode tab stack and the second electrode tab stack, and a second electrode lead coupled to the first electrode lead, and wherein the second electrode lead may include a facing portion facing the first electrode lead, and an extension portion extending from the facing portion in a direction distant from the electrode.

Unless expressly stated otherwise, the disclosed embodiments may be combined with other embodiments. Alternatively, in combining an embodiment with other embodiment, any combination of embodiments may be made unless expressly limited. It should be understood that such a combination of embodiments is disclosed in the present disclosure.

Although the present disclosure has been hereinabove described with regard to a limited number of embodiments and drawings, the present disclosure is not limited thereto, and the present disclosure may be embodied in different forms by persons having ordinary skill in the technical field pertaining to the present disclosure within the technical aspect of the present disclosure and the appended claims and their equivalent scope.

### [List of Reference Numerals]

B: secondary battery
10: battery case
11: accommodation portion
11S: electrode accommodation space
12: side portion
12a: lead sealing portion
12b: degassing sealing portion
12c: folding portion
EA: electrode assembly
100: electrode
110: electrode body
120: electrode tab
120a: first electrode tab
120b: second electrode tab
121: electrode tab stack
121a: first electrode tab stack
121b: second electrode tab stack
EL: electrode lead
200: first electrode lead
200a: first partial electrode lead
200b: second partial electrode lead
202H: bending groove
300: second electrode lead
310: facing portion
311H: coupling slit
310a-2, 310a-3: first facing portion
310b-2, 310b-3: second facing portion
320: extension portion
400: lead film
500: attachment member
DS: dead space
DD: dead space distance
H: lead height
WL: welding line
CL: cutting slit
A1: first tab overlapping area
A2: second tab overlapping area

## Claims

1. An electrode assembly comprising:
an electrode including an electrode body, a first electrode tab extending from the electrode body, and a second electrode tab extending from the same side as a side of the electrode body, from which the first electrode tab extends, the electrode being provided in plurality to be stacked; and
an electrode lead electrically coupled to the electrode tabs,
wherein the first electrode tabs and the second electrode tabs of the plurality of electrodes are bent and stacked in different directions, to form a first electrode tab stack and a second electrode tab stack, respectively,
wherein the electrode lead includes:
a first electrode lead provided to be in contact with the first electrode tab stack and the second electrode tab stack; and
a second electrode lead coupled to the first electrode lead, and
wherein the second electrode lead includes:
a facing portion facing the first electrode lead; and
an extension portion extending from the facing portion in a direction distant from the electrode.

2. The electrode assembly according to claim 1,
wherein the facing portion is coupled to the first electrode lead while being in surface contact with the first electrode lead.

3. The electrode assembly according to claim 1,
wherein the first electrode lead has a plate shape and overlaps the first electrode tab stack and the second electrode tab stack.

4. The electrode assembly according to claim 1,
wherein the first electrode lead is coupled to the first electrode tab stack and the second electrode tab stack by being welded to the first electrode tab stack and the second electrode tab stack in directions in which the first electrode tab stack and the second electrode tab stack extend while overlapping the first electrode tab stack and the second electrode tab stack.

5. The electrode assembly according to claim 1,
wherein end portions of the first electrode tab stack and the second electrode tab stack are bent to be in contact with the opposite side of a side at which the first electrode lead faces the electrode body.

6. The electrode assembly according to claim 5, further comprising:
an attachment member coupling the end portions of the first electrode tab stack and the second electrode tab stack, the first electrode lead, and the electrode body.

7. The electrode assembly according to claim 6,
wherein the attachment member is electrically insulated and is provided in a pair to respectively correspond to the first electrode tab stack and the second electrode tab stack, and
wherein the second electrode lead is coupled to the first electrode lead between the pair of attachment members.

8. The electrode assembly according to claim 1, further comprising:
a lead film coupled to the extension portion.

9. The electrode assembly according to claim 1,
wherein the extension portion is located in the middle of the electrode body in a stacking direction of the electrode body.

10. The electrode assembly according to claim 1,
wherein the first electrode lead and the second electrode lead are integrally formed.

11. The electrode assembly according to claim 1,
wherein the facing portion is formed to be bent from the first electrode lead.

12. The electrode assembly according to claim 1,
wherein a bending groove is formed at a position of the first electrode lead, which is adjacent to the facing portion.

13. The electrode assembly according to claim 1,
wherein the facing portion includes a first facing portion and a second facing portion, which are bent in different directions.

14. The electrode assembly according to claim 13,
wherein the first electrode lead includes a first partial electrode lead extending from the first facing portion and a second partial electrode lead extending from the second facing portion in a direction different from a direction in which the first partial electrode lead extends, and
wherein an area of the first partial electrode lead, which does not overlap the first facing portion, is located in a bending direction of the first electrode tab stack, and
an area of the second partial electrode lead, which does not overlap the second facing portion, is located in a bending direction of the second electrode tab stack.

15. The electrode assembly according to claim 1,
wherein a coupling slit is formed in an area of the facing portion, which overlaps the first electrode lead.

16. An electrode assembly comprising:
an electrode including an electrode body and an electrode tab bent and extending from the electrode body; and
an electrode lead electrically coupled to the electrode tab,
wherein the electrode lead includes:
a first electrode lead provided to be in surface contact with the electrode tab; and
a second electrode lead coupled to the first electrode lead while being in surface contact with the first electrode lead.

17. The electrode assembly according to claim 16,
wherein the second electrode lead includes:
a facing portion facing the first electrode lead; and
an extension portion extending from the facing portion in a direction distant from the electrode.

18. The electrode assembly according to claim 16,
wherein the first electrode lead has a plate shape and overlaps the first electrode tab stack and the second electrode tab stack.

19. The electrode assembly according to claim 16,
wherein a tab coupling slit is formed in an area of the first electrode lead, which overlaps the electrode tab.

20. A secondary battery comprising:
an electrode assembly; and
a battery case accommodating the electrode assembly,
wherein the electrode assembly includes:
an electrode including an electrode body, a first electrode tab extending from the electrode body, and a second electrode tab extending from the same side as a side of the electrode body, from which the first electrode tab extends, the electrode being provided in plurality to be stacked; and
an electrode lead electrically coupled to the electrode tabs,
wherein the first electrode tabs and the second electrode tabs of the plurality of electrodes are bent and stacked in different directions, to form a first electrode tab stack and a second electrode tab stack, respectively,
wherein the electrode lead includes:
a first electrode lead provided to be in contact with the first electrode tab stack and the second electrode tab stack; and
a second electrode lead coupled to the first electrode lead, and
wherein the second electrode lead includes:
a facing portion facing the first electrode lead; and
an extension portion extending from the facing portion in a direction distant from the electrode.
